# EUROPÄISCHE PATENTANMELDUNG

(11) **EP 3 626 518 A1**
(43) Veröffentlichungstag der Anmeldung: **25.03.2020**
(21) Anmeldenummer: 19201900.8
(22) Anmeldetag: 19.08.2009
(51) Int. Cl.: B60N 2/28

(54) **SICHERHEITSVORRICHTUNG FÜR EINEN KINDERSITZ IN EINEM FAHRZEUG**

(30) Priorität: 08.09.2008 DE 102008046249
(62) Teilanmeldung aus: 09168174.2
(71) Anmelder: CYBEX GmbH, 95448 Bayreuth (DE)
(72) Erfinder: Pos, Martin, 95445 Bayreuth (DE)
(74) Vertreter: Pfrang, Tilman

(57) **Zusammenfassung**

Die Erfindung betrifft eine Sicherheitsvorrichtung für einen Kindersitz (10) in einem Fahrzeug, mit Sitzfläche (12), und Rückenlehne (13), welche zumindest ein Fangelement (16) umfasst, das sich etwa quer oberhalb der Oberschenkel eines in dem Kindersitz sitzenden Kindes erstreckend in Richtung etwa parallel zur Sitzfläche verstellbar gelagert ist, wobei das Fangelement (16) unter Einwirkung von Aufprallkräften plastisch deformierbare Elemente umfasst, insbesondere im Brustauflagebereich und/oder im Bereich des Anschlusses am Kindersitz, insbesondere an den beiden Armlehnen (15) desselben.

## Beschreibung

Die vorliegende Erfindung betrifft eine Sicherheitsvorrichtung für einen Kindersitz in einem Fahrzeug, mit Sitzfläche, Rücken- und ggf. Armlehnen, welche zumindest ein Fangelement umfasst, das sich etwa quer oberhalb der Oberschenkel eines in dem Kindersitz sitzenden Kindes erstreckend in Richtung etwa parallel zur Sitzfläche verstellbar gelagert ist.

Eine derartige Sicherheitsvorrichtung ist zum Beispiel bekannt aus der DE 103 51 918 A1 oder DE 198 55 032 C1. Bei der Konstruktion gemäß der DE 103 51 918 A1 führt das Fangelement im Fall einer Verzögerung des Fahrzeuges eine auf das Kind gerichtete Bewegung aus. Damit soll das Sicherheitspotential für das Kind im Falle eines Unfalls erhöht werden, indem die Bewegung bzw. die Nickbewegung des Kinderkörpers im Falle einer erheblichen Verzögerung des Fahrzeuges weiter eingeschränkt bzw. vermieden wird.

Bei der Konstruktion gemäß der DE 198 55 032 C1 geht es primär um einen erhöhten Komfort. Das Fangelement weist zwei klappbare Teile auf, die den Ein- und Ausstieg des Kindes erleichtern. Des weiteren ist das Fangelement in Längsrichtung der Armlehnen des Kindersitzes zur Einstellung auf die Größe des Kindes verschiebbar gelagert.

Damit allein lässt sich jedoch eine Einstellung auf die Größe des Kindes nur unzureichend erreichen.

Dementsprechend liegt der vorliegenden Erfindung die Aufgabe zugrunde, eine Sicherheitsvorrichtung für einen Kindersitz in einem Fahrzeug zur Verfügung zu stellen, die neben der geforderten Sicherheit im Falle einer starken Verzögerung des Fahrzeuges bzw. eines Unfalls einen erhöhten Komfort für das Kind bietet.

Diese Aufgabe wird insbesondere durch die kennzeichnenden Merkmale des Anspruches 1 gelöst, wobei vorteilhafte Details und Weiterentwicklungen in den Unteransprüchen beschrieben sind.

Insbesondere soll das Fangelement unter Einwirkung von Aufprallkräften plastisch deformierbare Elemente umfassen, die einen Großteil der Aufprallenergie aufnehmen und vernichten. Diese plastisch deformierbaren Elemente können Teil der Längsführung des Fangelementes am Kindersitz sein. Alternativ können derartige plastisch deformierbare Elemente im Bereich der Brustauflage oder im Bereich des Anschlusses des Fangelements am Kindersitz vorgesehen sein.

Ein weiterer Aspekt der vorliegenden Erfindung liegt darin, dass die Verstellrichtung des Fangelements sich relativ zur Sitzfläche in einem vorbestimmten von hinten nach vorne ansteigenden Winkel von größer 0, insbesondere von etwa 5° bis 20° erstreckt. Damit lässt sich das Fangelement der Körpergröße des Kindes sowohl in horizontaler als auch in vertikaler Richtung besser anpassen.

Vorzugsweise ist das Fangelement stufenlos, oder alternativ stufenweise verstellbar. Im letztgenannten Fall ist das Fangelement vorzugsweise an jeder Verstellstufe verrastbar. Bezüglich der Ausbildung einer entsprechenden Rasteinrichtung wird auf die abhängigen Ansprüche verwiesen.

Ein weiterer Aspekt der vorliegenden Erfindung zeichnet sich dadurch aus, dass das Fangelement zugleich die Aufnahme des dem Kraftfahrzeug zugeordneten Sicherheitsgurtes dient, wodurch der Kindersitz samt Fangelement am Fahrzeugsitz festlegbar ist. Insofern erfüllt das Fangelement eine Doppelfunktion, nämlich
- Aufnahme des dem Kraftfahrzeug zugeordneten Sicherheitsgurtes und dadurch Festlegung des Kindersitzes am Fahrzeugsitz;
- an die Größe des Kindes anpassbares Halteelement für das Kind im Sitz.

Nachstehend wird eine bevorzugte Ausführungsform einer Sicherheitsvorrichtung gemäß vorliegender Erfindung anhand der beigefügten Zeichnung näher beschrieben, wobei dabei auch weitere Aspekte der vorliegenden Erfindung hervorgehoben sind. Es zeigen:
- Fig. 1: eine perspektivische Ansicht eines Kindersitzes mit Fangvorrichtung;
- Fig. 2: das Sitzteil des Kindersitzes gemäß Fig. 1 ohne gepolsterte Verkleidung und mit erfindungsgemäß ausgebildetem Fangelement in Seitenansicht;
- Fig. 3: die Abbildung entsprechend Fig. 2, wobei das Fangelement etwas nach vorne/oben verstellt ist (mittlere Position);
- Fig. 4: die Abbildung entsprechend Fig. 2, wobei das Fangelement sich in seiner vordersten Lage relativ zum Sitzteil befindet (maximale Tiefe und Höhe des Fangelements relativ zum Sitz);
- Fig. 5: eine Abbildung entsprechend Fig. 2 unter schematischer Darstellung der Relativbewegung des Fangelements zum Sitzteil;
- Fig. 6: das Fangelement in perspektivischer Vorderansicht;
- Fig. 7: das Fangelement in perspektivischer Schnittansicht unter Darstellung eines Rastmechanismus in geöffnetem Zustand; und
- Fig. 8: die Darstellung entsprechend Fig. 7 mit Rastmechanismus in verriegeltem Zustand.

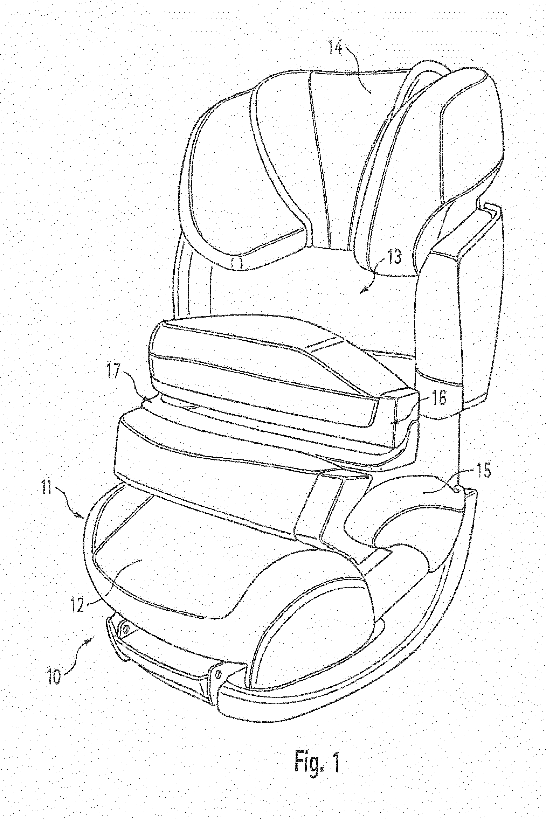

In Fig. 1 ist ein Kindersitz 10 abgebildet, der zur Anbringung auf einem Fahrzeugsitz, beispielsweise auf einer Kraftfahrzeug-Rücksitzbank, bestimmt ist. Dieser Kindersitz umfasst ein Sitzteil 11 mit Sitzfläche 12, eine Rückenlehne 13 mit Kopfstütze 14 sowie zwei Armlehnen 15, die im vorliegenden Fall integral mit dem Sitzteil 11 verbunden sind. Des weiteren ist dem Kindersitz 10 ein Fangelement 16 zugeordnet, das sich quer oberhalb der Oberschenkel eines in dem Kindersitz sitzenden Kindes erstreckend in Längsrichtung der Armlehnen 15 verstellbar gelagert ist. An der Vorderseite des querbügelartigen Fangelements ist eine schlitzartige Öffnung 17 zur Aufnahme von Abschnitten eines einem Kraftfahrzeug zugeordneten Sicherheitsgurtes, insbesondere Dreipunkt-Sicherheitsgurtes ausgebildet. In diesem Fall erstreckt sich sowohl ein Horizontal- als auch Diagonalabschnitt des Sicherheitsgurtes durch die schlitzartige Öffnung 17 hindurch. Damit wird der Kindersitz 10 am Fahrzeugsitz durch den Sicherheitsgurt gehalten.

Das Fangelement 16 umfasst vorzugsweise einen Hohl -oder Schaumkörper mit etwa U-förmigem Querschnitt, der in Richtung nach vorne hin offen ist und die erwähnte Gurtaufnahme 17 definiert. An der dem Kind zugewandten Seite, d.h. sowohl der der Rückenlehne 13 als auch der Sitzfläche 12 zugewandten Seite ist das Fangelement 16 gepolstert.

Wie bereits eingangs erwähnt, kann das Fangelement 16 unter Einwirkung von Aufprallkräften plastisch deformierbare Elemente umfassen, insbesondere im Brustauflagebereich oder im Bereich des Anschlusses am Kindersitz, insbesondere an beiden Armlehnen 15 desselben. Der sicherheitstechnische Aspekt dieser Ausbildung ist ebenfalls eingangs erwähnt.

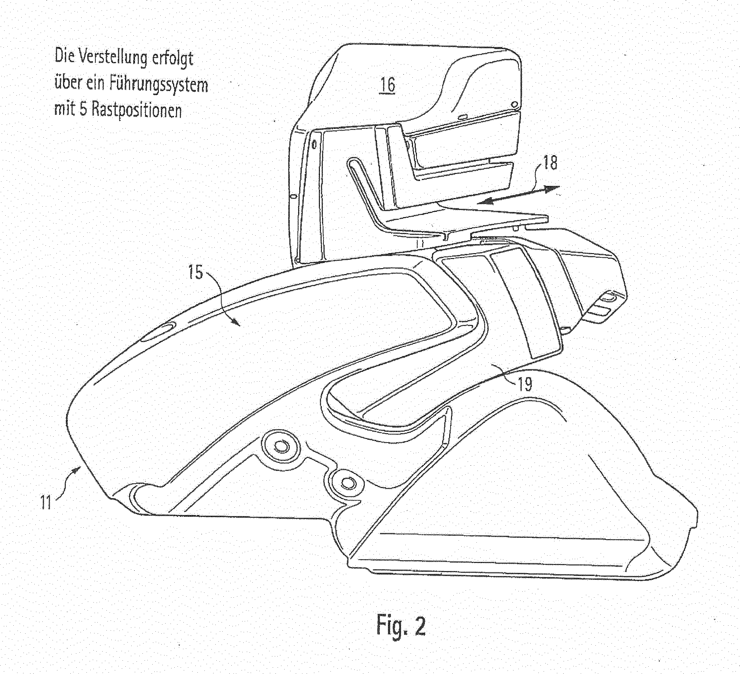

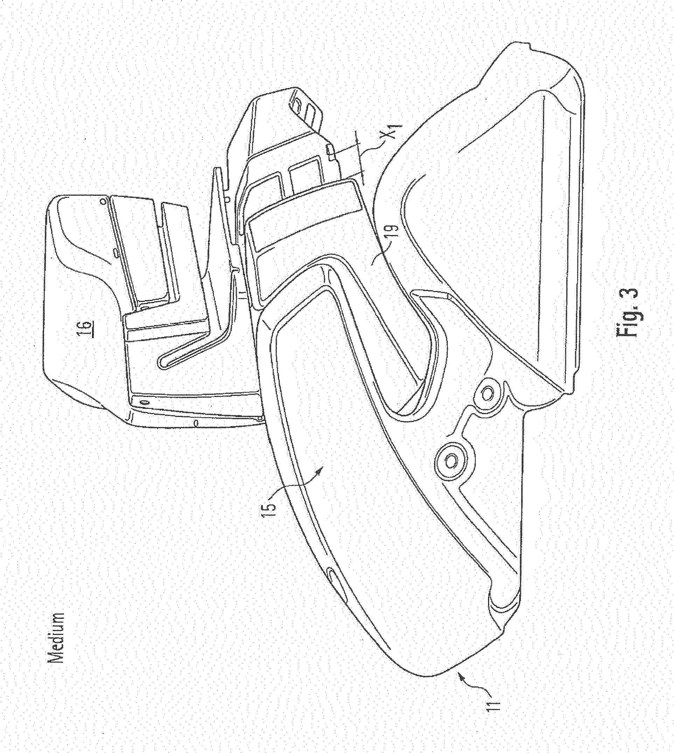

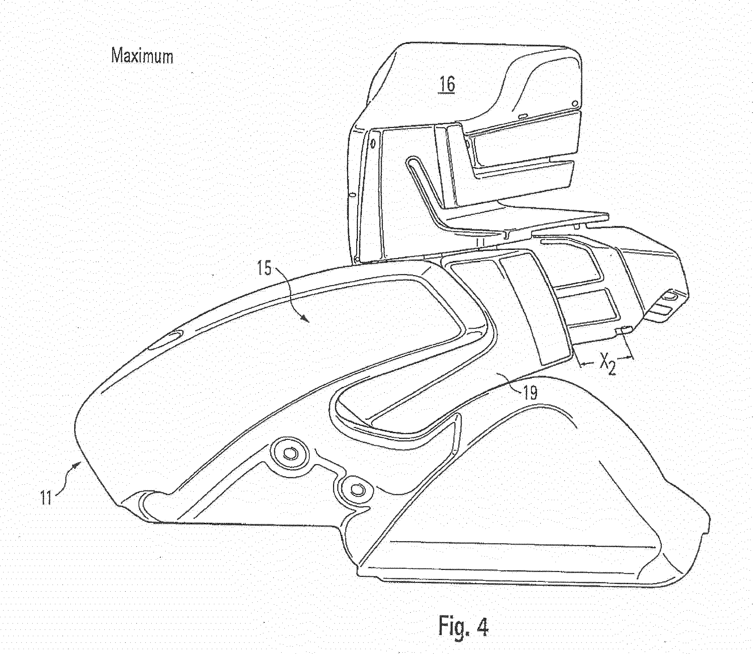

In Fig. 2 ist nur das Sitzteil 11 ohne Polsterung und Überzug dargestellt, und zwar in Seitenansicht. Fig. 2 lässt auch sehr gut erkennen, dass die dem Sitzteil 11 zugeordneten Armlehnen 15 integral mit dem Sitzteil verbunden sind. An diesen Armlehnen 15 ist über ein Anschlussteil 19 das Fangelement 16 befestigt. Die Befestigung des Fangelements 16 am Anschlussteil 19 erfolgt so, dass das Fangelement 16 in Richtung des Doppelpfeiles 18 hin- und herbewegbar ist. Diese Relativbewegung ist durch Vergleich der Figuren 2 mit den Figuren 3 und 4 erkennbar. In Fig. 2 befindet sich das Fangelement 16 in der hintersten Stellung, d.h. in einer Stellung, in der es sowohl der Rückenlehne als auch der Sitzfläche am nächsten liegt. In Fig. 3 ist das Fangelement 16 um eine vorbestimmte Strecke "X₁" nach vorne verschoben und dort verrastet. In Fig. 4 befindet sich das Fangelement 16 in der vordersten Stellung. Die Verschiebestrecke ist mit "X₂" gekennzeichnet.

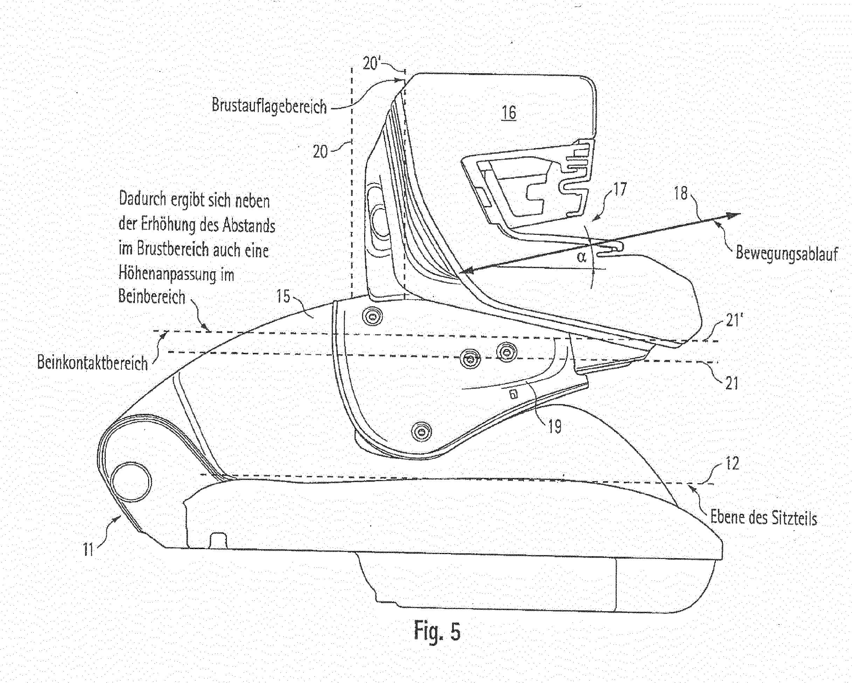

Den Figuren 2 bis 4 kann ebenso wie der Fig. 5 entnommen werden, dass die Verstellrichtung des Fangelements 16 sich relativ zur Sitzfläche 12 (siehe insbesondere Fig. 5) in einem entweder vorbestimmten oder sich frei einstellenden, von hinten nach vorne ansteigenden Winkel α von größer 0, insbesondere von etwa 5° bis 20° erstreckt. Damit lässt sich das Fangelement in optimaler Weise an unterschiedliche Körpergrößen eines im Kindersitz sitzenden Kindes anpassen, und zwar sowohl im Brustbereich als auch im Bereich der Oberschenkel des Kindes. Mit anderen Worten, es lässt sich erfindungsgemäß sowohl die Tiefe als auch die Höhe des Fangelements 16 einstellen, nämlich die Tiefe relativ zur Brust und die Höhe relativ zu den Oberschenkeln eines Kindes. In Fig. 5 sind zwei zugeordnete Brustauflagebereiche einerseits und Beinkontaktbereiche andererseits mit den Bezugsziffern 20, 20' bzw. 21, 21' gekennzeichnet.

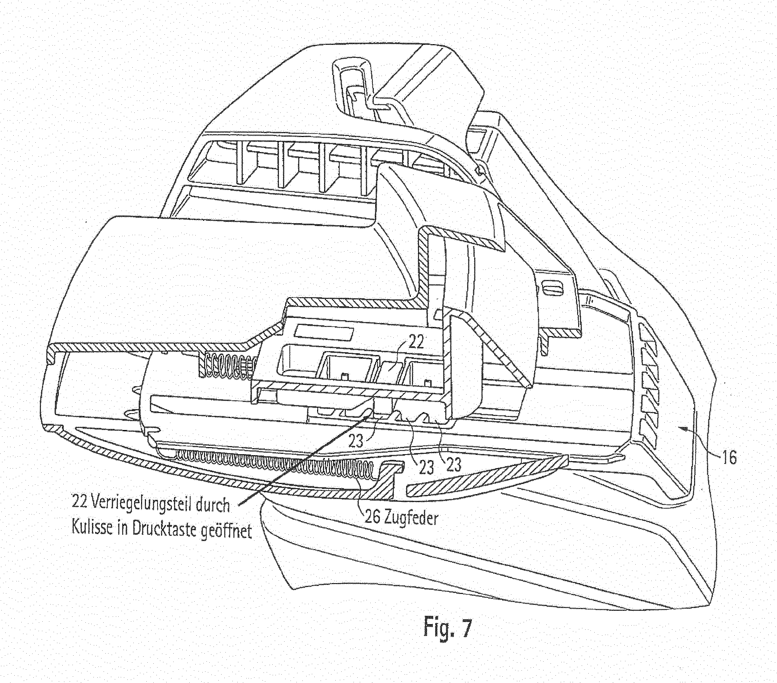

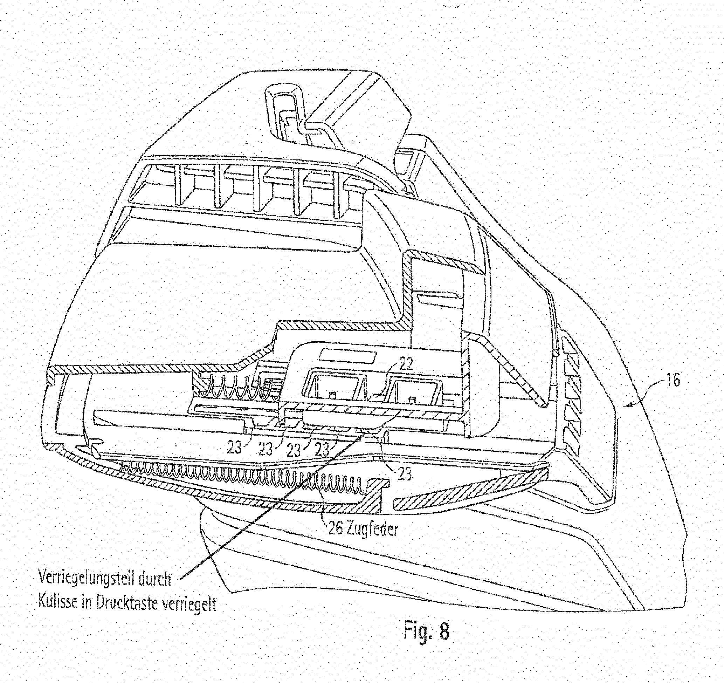

Das Fangelement 16 soll bei der dargestellten Ausführungsform stufenweise verstellbar sein, wobei die Fixierung der Relativstellung des Fangelements 16 gegenüber Sitzteil und Rückenlehne vorzugsweise durch Formschluss erfolgt, und zwar durch einen zwischen Anschlussteil 19 und Fangelement 16 angeordneten Rastmechanismus. Bei einer bevorzugten Ausführungsform umfasst dieser Rastmechanismus wenigstens zwei, insbesondere aber vier bis acht, vorzugsweise wenigstens fünf Rastpositionen. Dementsprechend umfasst jedes Anschlussteil 19 ein Rastelement, insbesondere riegelartiges Rastelement 22 (siehe Figuren 7 und 8), welches unter elastischer Vorspannung, d.h. unter Vorspannung einer z.B. Druckfeder in wenigstens zwei, hier fünf am Fangelement 16 in Verstellrichtung desselben voneinander beabstandete Rastausnehmungen 23 einrastbar ist.

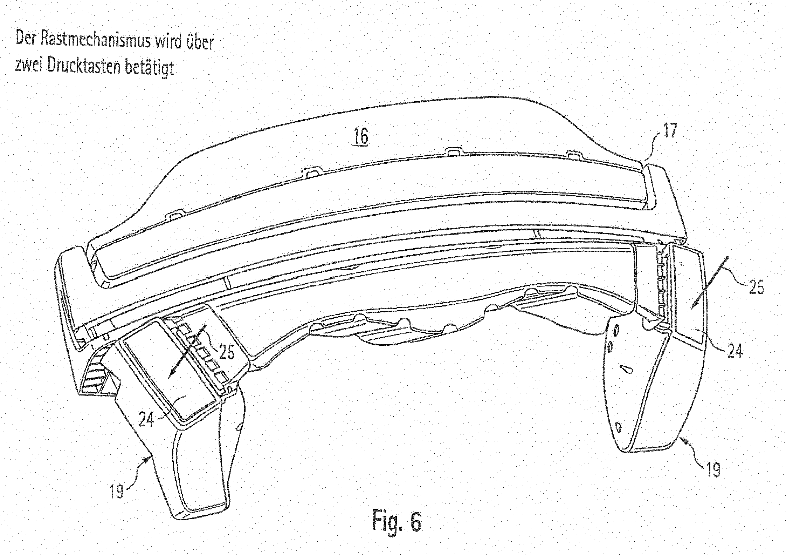

Die jedem Anschlussteil 19 zugeordneten Rastelemente 22 sind mit einer von außen her zugänglichen Drucktaste 24 (siehe Fig. 6) wirkverbunden, durch deren Betätigung in Richtung der Pfeile 25 in Fig. 6 die Rastelemente 22 entgegen deren elastischer Vorspannung in Außerrast- bzw. Fangelement-Freigabestellung bringbar sind, so wie dies in Fig. 7 schematisch dargestellt ist. Dort ist das riegelartige Rastelement 22 außer Eingriff mit einer zugeordneten Rastausnehmung 23 gebracht.

In Fig. 8 befindet sich das riegelartige Rastelement 22 dagegen in Raststellung, d.h. innerhalb einer der fünf Rastausnehmungen 23.

Die Wirkverbindung zwischen Drucktaste 24 und Rastriegel 22 erfolgt in an sich bekannter Weise, vorzugsweise durch eine Kulissensteuerung.

Des weiteren sei erwähnt, dass das Fangelement 16 entgegen der Wirkung eines elastischen Elements, insbesondere einer Zugfeder 26 aus der der Rückenlehne 13 und Sitzfläche 12 nächstgelegenen Stellung in eine davon entferntere Stellung verstellbar bzw. verschiebbar ist. Die erwähnte Zugfeder 26 ist in den Figuren 7 und 8 dargestellt. Dies bedeutet, dass bei Betätigung der Drucktasten 24 und Entriegelung der Rastelemente 22, 23 das Fangelement 16 durch die Zugfeder(n) 26 mehr oder weniger selbsttätig zurückbewegt wird in eine Position entsprechend Fig. 2.

Durch die erwähnten Rastpositionen wird eine feste Verbindung des Fangelements relativ zum Sitz in jeder Rastposition gewährleistet.

Das Sitzteil samt Armlehnen 15 ist ein einheitliches Bauteil aus Kunststoff, welches mit geeignetem Polster überzogen ist. Die Rückenlehne ist in an sich bekannter Weise an das Sitzteil angelenkt oder angeformt.

Sämtliche in den Anmeldungsunterlagen offenbarten Merkmale werden als erfindungswesentlich beansprucht, soweit sie einzeln oder in Kombination gegenüber dem Stand der Technik neu sind.

Nachfolgend werden noch Aspekte der Erfindung wiedergegeben, die jeweils für sich oder in Kombination mit dem Vorstehenden als (eigenständige oder weiterbildende) erfindungsgemäße Lösungen beansprucht werden.
Aspekt 1: Sicherheitsvorrichtung für einen Kindersitz (10) in einem Fahrzeug, mit Sitzfläche (12), und Rückenlehne (13), welche zumindest ein Fangelement (16) umfasst, das sich etwa quer oberhalb der Oberschenkel eines in dem Kindersitz sitzenden Kindes erstreckend in Richtung etwa parallel zur Sitzfläche verstellbar gelagert ist,
   **dadurch gekennzeichnet, dass**
   die Verstellrichtung (18) des Fangelements (16) sich relativ zur Sitzfläche (12) in einem von hinten nach vorne ansteigenden Winkel (α) > 0, insbesondere in einem Winkel (α) von etwa 5° bis 20°, erstreckt.
Aspekt 2: Sicherheitsvorrichtung nach Aspekt 1,
   **dadurch gekennzeichnet, dass**
   das Fangelement (16) stufenlos, oder alternativ stufenweise verstellbar ist.
Aspekt 3: Sicherheitsvorrichtung nach Aspekt 1 oder 2,
   **dadurch gekennzeichnet, dass**
   die Relativstellung des Fangelements (16) kraft- und/oder formschlüssig fixierbar ist.
Aspekt 4: Sicherheitsvorrichtung nach Aspekt 3,
   **dadurch gekennzeichnet, dass**
   das Fangelement (16) am Kindersitz (10), insbesondere an mit Armlehnen (15) verbundenen Anschlussteilen (19), insbesondere in Form von Anschlusswangen, in wenigstens zwei unterschiedlichen Positionen relativ zur Sitzfläche (12) und Rückenlehne (13) verrastbar ist.
Aspekt 5: Sicherheitsvorrichtung nach Aspekt 4,
   **dadurch gekennzeichnet, dass**
   die Längsführung des Fangelements (16) vier bis acht, insbesondere fünf Rastpositionen umfasst.
Aspekt 6: Sicherheitsvorrichtung nach Aspekt 4 oder 5,
   **dadurch gekennzeichnet, dass**
   jedes Anschlussteil (19) ein Rastelement (22) umfasst, welches unter elastischer Vorspannung in wenigstens zwei am Fangelement (16) in Verstellrichtung desselben voneinander beabstandete Rastausnehmungen (23) einrastbar ist.
Aspekt 7: Sicherheitsvorrichtung nach Aspekt 6,
   **dadurch gekennzeichnet, dass**
   jedes Rastelement (22) mit einer von außen her zugänglichen Drucktaste (24) od. dgl. Betätigungselement wirkverbunden ist, durch deren bzw. dessen Betätigung (Pfeil 25) das Rastelement (22) entgegen dessen elastischer Vorspannung in Außerrast- bzw. Fangelement-Freigabestellung bringbar ist.
Aspekt 8: Sicherheitsvorrichtung nach einem der Aspekte 1 bis 7,
   **dadurch gekennzeichnet, dass**
   das Fangelement (16) entgegen der Wirkung eines elastischen Elements, insbesondere einer Feder (26) aus der der Rückenlehne (13) und Sitzfläche (12) nächstgelegenen Stellung in eine davon entferntere Stellung verstell- bzw. verschiebbar ist.
Aspekt 9: Sicherheitsvorrichtung nach einem der Aspekte 1 bis 8,
   **dadurch gekennzeichnet, dass**
   das Fangelement (16) ein der Brust und ggf. auch den Oberschenkeln eines Kindes zugewandtes Polster umfasst, welches einen Brustauflagebereich (20, 20') und Beinkontaktbereich (21, 21') definiert.
Aspekt 10: Sicherheitsvorrichtung, insbesondere nach einem der Aspekte 1 bis 9,
   **dadurch gekennzeichnet, dass**
   das Fangelement (16) unter Einwirkung von Aufprallkräften plastisch deformierbare Elemente umfasst, insbesondere im Brustauflagebereich und/oder im Bereich des Anschlusses am Kindersitz, insbesondere an den beiden Armlehnen (15) desselben.
Aspekt 11: Sicherheitsvorrichtung nach einem der Aspekte 1 bis 10,
   **dadurch gekennzeichnet, dass**
   das Fangelement (16) an der der Rückenlehne (13) abgewandten Seite eine Öffnung (17) zur Aufnahme von Abschnitten, insbesondere eines Horizontal- und Diagonalabschnitts, eines einem Kraftfahrzeug zugeordneten Sicherheitsgurtes, insbesondere Dreipunkt-Sicherheitsgurtes aufweist.
Aspekt 12: Sicherheitsvorrichtung nach einem der Aspekte 1 bis 11,
   **dadurch gekennzeichnet, dass**
   das Fangelement (16) einen Hohlkörper mit etwa U-förmigem Querschnitt umfasst, der in montierter Stellung in Richtung nach vorne hin offen ist und eine schlitzartige Gurtaufnahme definiert.

### Bezugszeichen

- 10: Kindersitz
- 11: Sitzteil
- 12: Sitzfläche
- 13: Rückenlehne
- 14: Kopfstütze
- 15: Armlehne
- 16: Fangelement
- 17: Öffnung zur Aufnahme von Sicherheitsgurt-Abschnitten
- 18: Doppelpfeil
- 19: Anschlussteil
- 20, 20': Brustauflagebereich
- 21, 21': Beinkontaktbereich
- 22: Rastelement (Rastriegel)
- 23: Rastausnehmung
- 24: Drucktaste
- 25: Pfeil
- 26: Zugfeder

## Patentansprüche

1. Sicherheitsvorrichtung für einen Kindersitz (10) in einem Fahrzeug, mit Sitzfläche (12), und Rückenlehne (13), welche zumindest ein Fangelement (16) umfasst,
**dadurch gekennzeichnet, dass**
das Fangelement (16) unter Einwirkung von Aufprallkräften plastisch deformierbare Elemente umfasst, insbesondere im Brustauflagebereich und/oder im Bereich des Anschlusses am Kindersitz, insbesondere an den beiden Armlehnen (15) desselben.

2. Sicherheitsvorrichtung nach Anspruch 1,
**dadurch gekennzeichnet, dass**
die plastisch deformierbaren Elemente Teil der Längsführung des Fangelementes am Kindersitz sind.

3. Sicherheitsvorrichtung nach Anspruch 1 oder 2,
**dadurch gekennzeichnet, dass**
das Fangelement (16) sich etwa quer oberhalb der Oberschenkel eines in dem Kindersitz sitzenden Kindes erstreckend in Richtung etwa parallel zur Sitzfläche verstellbar gelagert ist.

4. Sicherheitsvorrichtung nach Anspruch 3,
**dadurch gekennzeichnet, dass**
die Verstellrichtung (18) des Fangelements (16) sich relativ zur Sitzfläche (12) in einem von hinten nach vorne ansteigenden Winkel (α) > 0, insbesondere in einem Winkel (α) von etwa 5° bis 20°, erstreckt.

5. Sicherheitsvorrichtung nach einem der vorhergehenden Ansprüche,
**dadurch gekennzeichnet, dass**
das Fangelement (16) stufenlos, oder alternativ stufenweise verstellbar ist.

6. Sicherheitsvorrichtung nach Anspruch 3, 4 oder 5
**dadurch gekennzeichnet, dass**
die Relativstellung des Fangelements (16) kraft und/oder formschlüssig fixierbar ist.

7. Sicherheitsvorrichtung nach einem der Ansprüche 3 bis 6,
**dadurch gekennzeichnet, dass**
das Fangelement (16) am Kindersitz (10), insbesondere an mit Armlehnen (15) verbundenen Anschlussteilen (19), insbesondere in Form von Anschlusswangen, in wenigstens zwei unterschiedlichen Positionen relativ zur Sitzfläche (12) und Rückenlehne (13) verrastbar ist.

8. Sicherheitsvorrichtung nach Anspruch 7,
**dadurch gekennzeichnet, dass**
dass die Längsführung des Fangelements (16) vier bis acht, insbesondere fünf Rastpositionen umfasst.

9. Sicherheitsvorrichtung nach Anspruch 4 oder 5,
**dadurch gekennzeichnet, dass**
jedes Anschlussteil (19) ein Rastelement (22) umfasst, welches unter elastischer Vorspannung in wenigstens zwei am Fangelement (16) in Verstellrichtung desselben voneinander beabstandete Rastausnehmungen (23) einrastbar ist.

10. Sicherheitsvorrichtung nach Anspruch 9,
**dadurch gekennzeichnet, dass**
jedes Rastelement (22) mit einer von außen her zugänglichen Drucktaste (24) od. dgl. Betätigungselement wirkverbunden ist, durch deren bzw. dessen Betätigung (Pfeil 25) das Rastelement (22) entgegen dessen elastischer Vorspannung in Außerrast- bzw. Fangelement-Freigabestellung bringbar ist.

11. Sicherheitsvorrichtung nach einem der vorhergehenden Ansprüche,
**dadurch gekennzeichnet, dass**
das Fangelement (16) entgegen der Wirkung eines elastischen Elements, insbesondere einer Feder (26) aus der der Rückenlehne (13) und Sitzfläche (12) nächstgelegenen Stellung in eine davon entferntere Stellung verstell- bzw. verschiebbar ist.

12. Sicherheitsvorrichtung nach einem der vorhergehenden Ansprüche,
**dadurch gekennzeichnet, dass**
das Fangelement (16) ein der Brust und ggf. auch den Oberschenkeln eines Kindes zugewandtes Polster umfasst, welches einen Brustauflagebereich (20, 20') und Beinkontaktbereich (21, 21') definiert.

13. Sicherheitsvorrichtung nach einem der vorhergehenden Ansprüche,
**dadurch gekennzeichnet, dass**
das Fangelement (16) an der der Rückenlehne (13) abgewandten Seite eine Öffnung (17) zur Aufnahme von Abschnitten, insbesondere eines Horizontal- und Diagonalabschnitts, eines einem Kraftfahrzeug zugeordneten Sicherheitsgurtes, insbesondere Dreipunkt-Sicherheitsgurtes aufweist.

14. Sicherheitsvorrichtung nach einem der vorhergehenden Ansprüche,
**dadurch gekennzeichnet, dass**
das Fangelement (16) einen Hohlkörper mit etwa U-förmigem Querschnitt umfasst, der in montierter Stellung in Richtung nach vorne hin offen ist und eine schlitzartige Gurtaufnahme definiert.

15. Kindersitz (10) für ein Fahrzeug, insbesondere zur Anbringung auf einem Fahrzeugsitz, beispielsweise auf einer Kraftfahrzeug-Rücksitzbank, mit einer Sitzfläche (12) und einer Rückenlehne (13) sowie einer Sicherheitsvorrichtung nach einem der vorhergehenden Ansprüche, wobei das Fangelement sich etwa quer oberhalb der Oberschenkel eines in dem Kindersitz sitzenden Kindes erstreckend in Richtung etwa parallel zur Sitzfläche verstellbar gelagert ist.
